# EUROPEAN PATENT APPLICATION

(11) **EP 4 832 556 A1**
(43) Date of publication of application: **28.10.2026**
(21) Application number: 25754558.2
(22) Date of filing: 14.02.2025
(51) Int. Cl.: H04W 24/08

(54) **COMMUNICATION METHOD, USER DEVICE, AND NETWORK NODE**

(30) Priority: 14.02.2024 JP 2024020672
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2025/004989
(87) International publication number: WO 2025/173773

(57) **Abstract**

A communication method performed by a user equipment of a mobile communication system includes deriving a plurality of measurement values corresponding to one cell by repeatedly performing radio quality measurement for the one cell in layer 1 (L1), generating a radio resource control (RRC) message including the plurality of measurement values corresponding to the one cell, and transmitting the RRC message to a network.

## Description

### TECHNICAL FIELD

The present disclosure relates to a communication method, a user equipment, and a network node.

### BACKGROUND OF INVENTION

The Third Generation Partnership Project (3GPP) (registered trademark; hereinafter the same) has defined technical specifications for New Radio (NR), which is a fifth-generation (5G) radio access technology. 3GPP mobile communication systems instruct a serving cell switch (which may be referred simply as a "cell switch") of a user equipment in a radio resource control (RRC) connected state when a network node transmits a message of an RRC layer corresponding to layer 3 (L3) (so-called a handover command) to the user equipment.

On the other hand, Release 18 of the 3GPP standard (3GPP Release 18) formulates technical specifications of L1/L2-Triggered Mobility (LTM) that is a new procedure for a serving cell switch. LTM is a procedure in which a network node receives a layer 1 (L1) measurement report from a user equipment, and based on the report, the network node switches the serving cell of the user equipment using a cell switch command signaled by the network node to the user equipment by means of a Media Access Control (MAC) Control Element (CE).

### CITATION LIST

### NON-PATENT LITERATURE

NPL 1: 3GPP technical specification "3GPP TS 38.300 V18.0.0 (2023-12)"

### SUMMARY

The present disclosure provides a technology that enables network optimization pertaining to LTM.

A communication method according to a first aspect of the present disclosure is a communication method performed by a user equipment of a mobile communication system, the communication method including the steps of: deriving a plurality of measurement values corresponding to one cell by repeatedly performing radio quality measurement for the one cell in layer 1 (L1); generating a radio resource control (RRC) message including the plurality of measurement values corresponding to the one cell; and transmitting the RRC message to a network.

A user equipment according to a second aspect of the present disclosure is a user equipment used in a mobile communication system, the user equipment including: a controller configured to derive a plurality of measurement values corresponding to one cell by repeatedly performing radio quality measurement for the one cell in layer 1 (L1) and generate a radio resource control (RRC) message including the plurality of measurement values corresponding to the one cell; and a transmitter configured to transmit the RRC message to a network.

A network node according to a third aspect of the present disclosure is a network node used in a mobile communication system, the network node including a receiver configured to receive, from a user equipment, a radio resource control (RRC) message including a plurality of measurement values obtained by the user equipment repeatedly performing radio quality measurement for one cell in layer 1 (L1).

### BRIEF DESCRIPTION OF THE DRAWINGS

FIG. 1 is a diagram illustrating a configuration example of a mobile communication system according to an embodiment.
FIG. 2 is a diagram illustrating a configuration example of a user equipment (UE) according to the embodiment.
FIG. 3 is a diagram illustrating a configuration example of a network node (gNB) according to the embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating a configuration for measurement by UE.
FIG. 7 is a diagram for describing a filter coefficient of an L3 filter configured by a gNB for the UE through RRC.
FIG. 8 is a diagram illustrating an example of a procedure for LTM.
FIG. 9 is a diagram illustrating an operation of the UE according to the embodiment.
FIG. 10 is a diagram illustrating an example of a first operation pattern according to the embodiment.
FIG. 11 is a diagram for describing a Logged Measurement Configuration message according to the first operation pattern.
FIG. 12 is a diagram for describing a UE Information Response message according to the first operation pattern.
FIG. 13 is a flowchart showing an example of a second operation pattern according to the embodiment.
FIG. 14 is a diagram for describing HOP report according to a second operation pattern.
FIG. 15 is a diagram for describing SHR according to the second operation pattern.
FIG. 16 is a diagram illustrating an operation of the UE according to a variation of an embodiment.

### DESCRIPTION OF EMBODIMENTS

A mobile communication system according to an embodiment will be described with reference to the drawings. In the description of the drawings, the same or similar parts are denoted by the same or similar reference signs.

### (1) Configuration of Mobile Communication System

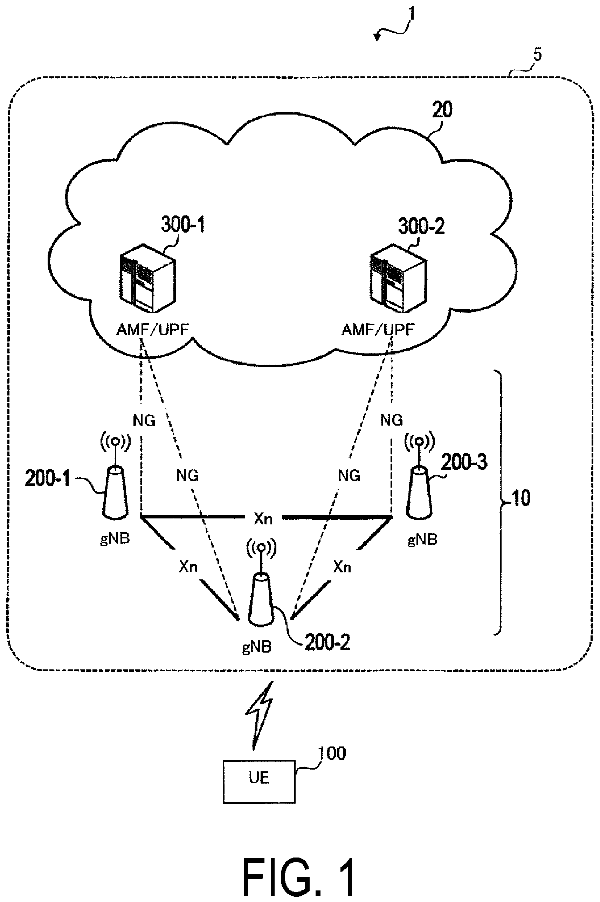

FIG. 1 is a diagram illustrating a configuration example of a mobile communication system 1 according to an embodiment. The mobile communication system 1 complies with the 5th Generation System (5GS) of the 3GPP standard. Although 5GS will be hereinafter used as an example, a Long Term Evolution (LTE) system may be applied at least partially to the mobile communication system. A sixth generation (6G) system may be at least partially applied to the mobile communication system.

The mobile communication system 1 includes a user equipment (UE) 100, a 5G radio access network (Next Generation Radio Access Network (NG-RAN)) 10, and a 5G core network (5GC) 20. Hereinafter, the NG-RAN 10 may be simply referred to as a RAN 10. In addition, the 5GC 20 may be simply referred to as a core network (CN) 20. The RAN 10 and the CN 20 constitute a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (vehicle UE), and a flying object or an apparatus provided on a flying object (aerial UE).

The NG-RAN 10 includes base stations 200 (referred to as "gNBs" in a 5G system), which are a type of the network node. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing the minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to the core network of LTE. An LTE base station can also be connected to the 5GC. The LTE base station and the gNB can be connected via an inter-base station interface.

The 5GC 20 includes an Access and Mobility Management Function (AMF) and User Plane Function (UPF) 300. The AMF performs various types of mobility control and the like for the UE 100. The AMF manages mobility of the UE 100 by communicating with the UE 100 using Non-Access Stratum (NAS) signaling. The UPF controls data transfer. The AMF and UPF are connected to the gNB 200 via an NG interface which is an interface between a base station and the core network.

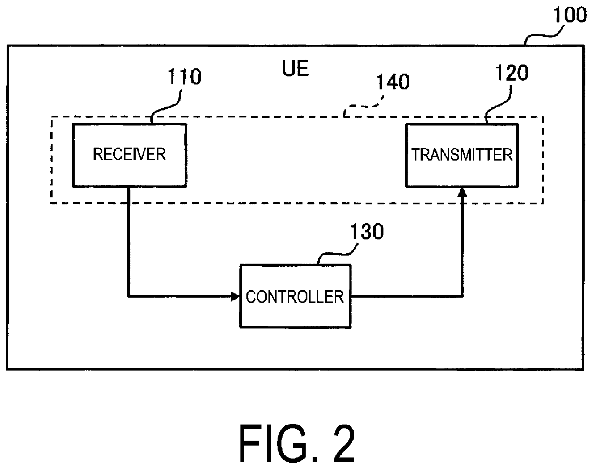

FIG. 2 is a diagram illustrating a configuration example of the user equipment (UE) 100 according to the embodiment. The UE 100 includes a receiver 110, a transmitter 120, and a controller 130. The receiver 110 and the transmitter 120 constitute a wireless communicator 140 that performs wireless communication with the gNB 200.

The receiver 110 performs various types of reception under the control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under the control of the controller 130. The transmitter 120 includes an antenna and a transmission device. The transmission device converts a baseband signal (a transmission signal) output by the controller 130 into a radio signal and transmits the resulting signal from the antenna.

The controller 130 performs various types of control and processing for the UE 100. Such processing includes processing of respective layers to be described below. The operations of the UE 100 described above and below may be performed under the control of a controller 230. The controller 130 includes at least one processor and at least one memory. The memory stores a program to be executed by the processor and information to be used for processing by the processor. The processor may include a baseband processor and a central processing unit (CPU). The baseband processor performs modulation and demodulation, coding and decoding, and the like of baseband signals. The CPU executes a program stored in the memory to thereby perform various types of processing.

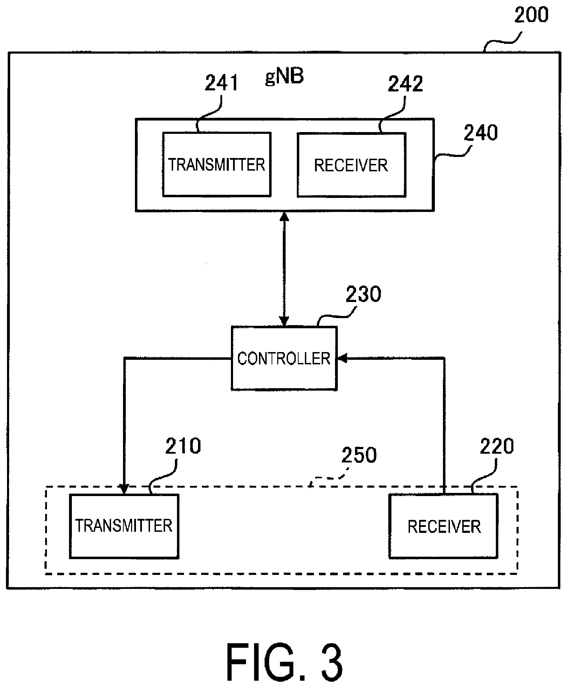

FIG. 3 is a diagram illustrating a configuration example of the gNB 200 (network node) according to the embodiment. The gNB 200 includes a transmitter 210, a receiver 220, the controller 230, and a network communicator 240. The transmitter 210 and the receiver 220 constitute a wireless communicator 250 that performs wireless communication with the UE 100. The network communicator 240 includes a transmitter 241 that performs transmission and a receiver 242 that performs reception.

The transmitter 210 performs various types of transmission under the control of the controller 230. The transmitter 210 includes an antenna and a transmission device. The transmission device converts a baseband signal (a transmission signal) output by the controller 230 into a radio signal and transmits the resulting signal from the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described below. The operations of the gNB 200 described above and below may be also performed under the control of the controller 230. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes a program stored in the memory to thereby perform various types of processing.

The network communicator 240 is connected to a neighboring base station via an Xn interface which is an inter-base station interface. The network communicator 240 is connected to the AMF/UPF 300 via an NG interface which is an interface between a base station and the core network. Note that the gNB 200 may include a central unit (CU) and a distributed unit (DU) (i.e., divided functions), and both units may be connected via an F1 interface that is a fronthaul interface.

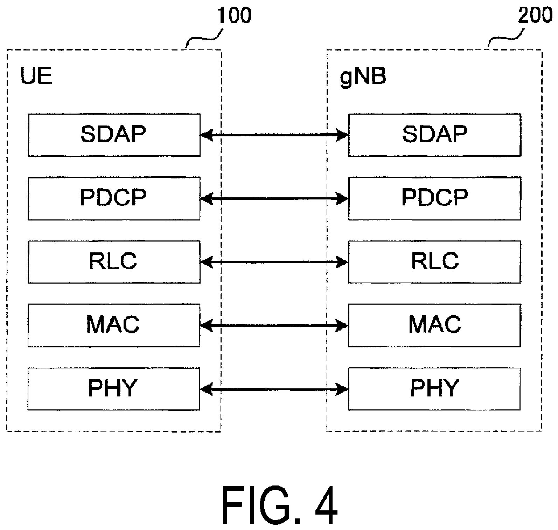

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 through a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as DCI addressed to the UE. The DCI transmitted from the gNB 200 is appended with Cyclic Redundancy Code (CRC) parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in uplink and downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

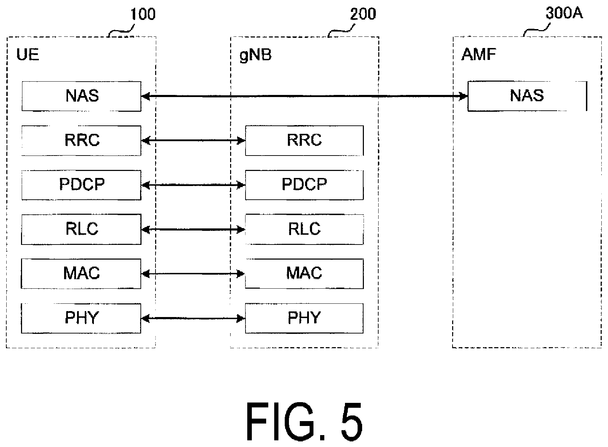

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When connection between the RRC of the UE 100 and the RRC of the gNB 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. In addition, the layer below the NAS layer is referred to as an AS layer (also simply referred to as ("AS").

### (2) Overview of Radio Quality Measurement by UE

The UE 100 in the RRC connected state measures at least one beam of a cell and averages the measured results (power values) to derive the radio quality of the cell. At that time, the UE 100 is configured to take into account a subset of the detected beam.

Here, filtering, which is measurement averaging, is performed at two different levels. The UE 100 first derives beam qualities by L1 filtering, which is filtering of a physical (PHY) layer (layer 1 (L1)), and then derives the cell quality from a plurality of beams by L3 filtering, which is filtering of an RRC layer (layer 3 (L3)) level. Note that the cell quality from beam measurement is derived in the same way for serving and non-serving cells. The UE 100 may include the measurement results of X best beams in an L3 measurement report, depending on the configuration by the gNB 200.

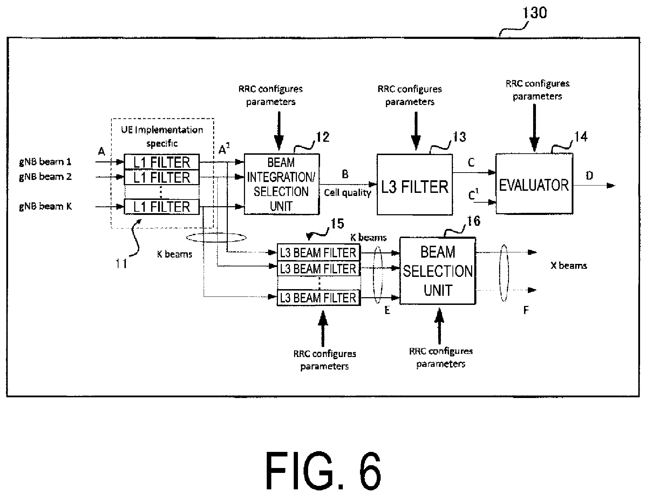

FIG. 6 is a diagram illustrating a configuration for measurement by the UE 100.

The controller 130 of the UE 100 includes an L1 filter 11, a beam integration/selection unit 12, an L3 filter 13, an evaluator 14, an L3 beam filter 15, and a beam selection unit 16.

The L1 filter 11 includes K L1 filters 11 corresponding to K beams. K measurement values A obtained by the UE 100 (receiver 110) measuring the radio qualities of the K beams are input to the L1 filter 11. The K measurement values A of the K beams are measurement values (beam-specific samples) inside the physical layers, and are measurement values of SS/PBCH block (SSB) or Channel State Information (CSI) reference signal resources detected by the UE 100 (receiver 110) in L1. The L1 filter 11 performs L1 filtering on the K measurement values A of the K beams in L1, and outputs beam-specific measurement values A¹ after the L1 filtering to the beam integration/selection unit 12 and the L3 beam filter 15.

The beam integration/selection unit 12 integrates the beam-specific measurement values A¹, derives a cell quality B, and outputs a cell quality B to the L3 filter 13. The operation of the beam integration/selection unit 12 is configured by RRC signaling from the gNB 200.

The L3 filter 13 performs filtering in L3 on the measurement value (cell quality B) output by the beam integration/selection unit 12, and outputs a measurement value C after L3 filtering to the evaluator 14. The configuration of the operation of the L3 filter 13 is provided by RRC signaling from the gNB 200. The measurement value C after L3 filtering is used as input for one or more evaluations of the L3 measurement report from the UE 100 to the gNB 200.

The L3 filter 13 filters the measurement result for each cell and each beam measurement amount according to the following equation (1) before using them for evaluation of reporting criteria or L3 measurement report: ${F}_{n} = \left(1-a\right) \times {F}_{n - 1} + a \times {M}_{n}$ (1)

Where Mₙ is the latest measurement result from the physical layer (L1). Fₙ is the updated filtered measurement result and is used for evaluation of reporting criteria or L3 measurement report. Fₙ₋₁ is the old filtered measurement result, and F₀ is set to M₁ when the first measurement result has been received from the physical layer (L1).

If MeasObjectNR is configured by RRC, a = 1/2^{(ki/4)}. Here kᵢ is a filter coefficient (filterCoefficient) of the corresponding measurement value of i-th QuantityConfigNR in quantityConfigNR-List, and i is indicated by quantityConfigIndex in MeasObjectNR. For other measurement values, a = 1/2^{(k/4)}. Here, k is a filter coefficient of the corresponding measurement value received by quantityConfig.

The L3 filter 13 adapts the filter such that the temporal characteristics of the filter are preserved at different incoming rates, while assuming a sample rate at which the filter coefficient k is equal to X milliseconds. The value of X corresponds to one intra-frequency L1 measurement period assuming non-DRX operation and depends on the frequency range.

Note that, if the filter coefficient k is set to zero (0), L3 filtering is not applied.

The evaluator 14 evaluates whether the L3 measurement report D to the gNB 200 is necessary. This evaluation can be based on a plurality of measurement flows at the reference point C, for example, a comparison of different measurement values. This is indicated by input C and input C¹. The evaluator 14 performs event evaluation corresponding to reporting criteria at least each time a new measurement result is reported at points C and C¹. The configuration of the reporting criteria is provided by RRC signaling from the gNB 200. The L3 measurement report D represents measurement report information (RRC message) transmitted from the UE 100 to the gNB 200. The L3 measurement report D includes the measurement ID of an associated measurement configuration that triggered reporting.

The L3 beam filter 15 performs filtering on k measurement values A¹ (that is, beam-specific measurement values) in units of beams, and outputs k measurement values E (that is, beam-specific measurement values) to the beam selection unit 16. The measurement values E are used as an input to select the X measurement values to be reported.

The beam selection unit 16 selects X measurement values F from the k measurement values E and outputs the X measurement values F. The X measurement values F are beam measuring information included in measurement report information (RRC message) transmitted from the E 100 to the gNB 200.

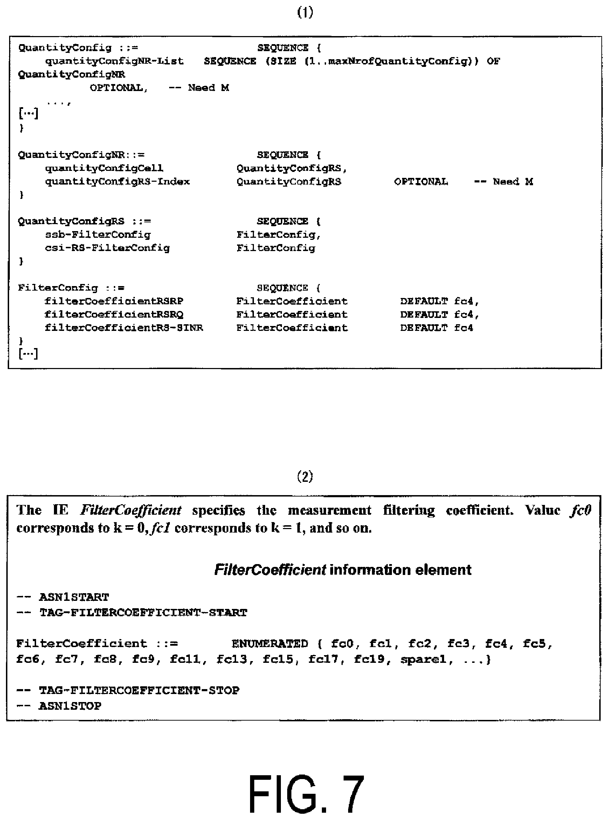

FIG. 7 is a diagram for describing a filter coefficient of the L3 filter 13 configured by RRC from the gNB 200 to the UE 100.

As shown in FIG. 7(1), the RRC information element QuantityConfigNR includes a list of QuantityConfigNR. Each QuantityConfigNR includes QuantityConfigRS. QuantityConfigRS includes FilterConfig. FilterConfig includes FilterCoefficient, which is fc4 (FilterCoefficient k = 4) by default. As shown in FIG. 7(2), FilterCoefficient is designated from the range from fc0 (FilterCoefficient k = 0) to fc19 (FilterCoefficient k = 19).

### (3) Overview of LTM Technology

The mobile communication system 1 according to the present embodiment supports L1/L2-Triggered Mobility (LTM).

In a general handover procedure, the serving cell switch is triggered by signaling of the L3, which is a higher layer, to be more specific, the RRC layer. Such a general handover is also referred to as an L3 handover. In the L3 handover, an L3 Measurement Report message, which is an RRC message, is transmitted from the UE 100 to the gNB 200, and the gNB 200 determines a handover of the UE 100 based on the Measurement Report message and instructs a cell switch by transmitting a handover command, which is an RRC message (to be more specific, an RRC reconfiguration message) from the gNB 200 to the UE 100.

On the other hand, LTM is a technology for reducing delay in mobility (specifically, delay in a serving cell switch) compared to a general handover procedure by triggering a serving cell switch through signaling of Layer 1 (L1) and/or Layer 2 (L2) that are lower layers. In LTM, the gNB 200 receives an L1 measurement report from the UE 100, and based on the report, the gNB 200 instructs the UE 100 to perform a serving cell switch with a cell switch command signaled by a MAC CE.

Specifically, in LTM, first, the gNB 200 prepares an LTM candidate cell configuration for a candidate for a switching destination cell, and provides the LTM candidate cell configuration to the UE 100 through RRC signaling.

Second, the UE 100 performs processing of synchronization with the candidate cell through an early synchronization (Early sync).

Thirdly, the gNB 200 receives the L1 measurement report from the UE 100, determines a serving cell switch to a target cell based on the L1 measurement report, and transmits a cell switch command indicating the target cell (LTM candidate cell configuration) to the UE 100 through the MAC CE. A serving cell switch trigger is transmitted through the MAC CE including at least a candidate configuration index together with a beam indicator.

Fourth, the UE 100 switches the serving cell in response to the cell switch command from the gNB 200 (source cell).

As described above, when the gNB 200 selects the LTM candidate cell configuration as a target configuration, the serving cell switch is triggered. The LTM candidate cell configuration can be added, changed and released by the gNB 200 through RRC signaling.

The following principles apply to LTM.
- Each LTM candidate cell configuration can be provided as a difference configuration (delta configuration) relative to a reference configuration used to form a complete candidate cell configuration.
- When the complete candidate cell configuration is applied, a current UE configuration is replaced at a time of a serving cell switch. Although replacement is made in the reconfiguration procedure, the MAC, RLC or PDCP layer is not necessarily reset.
- The user plane, if configured through RRC signaling in order to avoid additional delay of data recovery, is continued without reset.
- In LTM, security is not updated.
- LTM between subsequent LTM candidate cell configurations can be performed without RRC reconfiguration. That is, the UE 100 does not release other LTM candidate cell configurations after LTM is triggered.

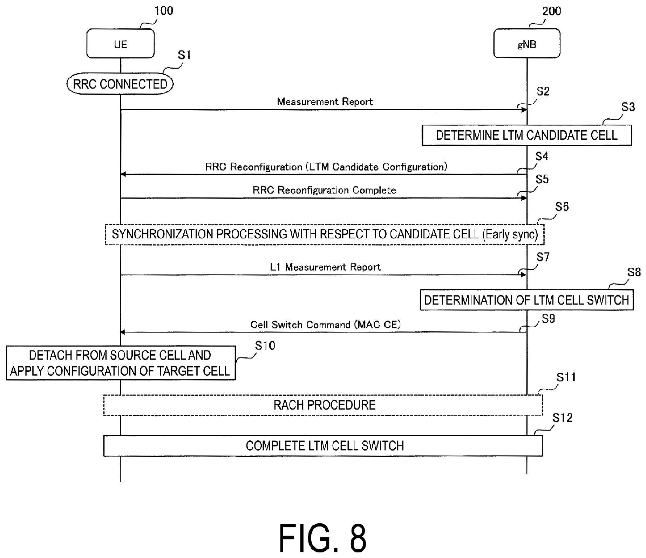

FIG. 8 is a diagram illustrating an example of a cell switch procedure using LTM. In the illustrated example, it is assumed that the UE 100 performs a serving cell switch from a first cell to a second cell in the gNB 200.

Here, the first cell and the second cell may be formed with respectively different Transmission and Reception Points (TRPs). In the following description of the embodiment, the second cell will be also referred to as a "candidate cell (or LTM candidate cell)" before a serving cell switch using LTM is determined, and the second cell will be also referred to as a "target cell" after the serving cell switch using LTM is determined. The first cell will be also referred to as a "source cell".

In step S1, the UE 100 is in the RRC connected state in the cell (first cell or source cell) of the gNB 200.

In step S2, the UE 100 transmits a Measurement Report message, which is an RRC message, to the gNB 200.

In step S3, the gNB 200 determines to use LTM based on the Measurement Report message and starts preparing candidate cells.

In step S4, the gNB 200 transmits an RRC Reconfiguration message including an LTM candidate cell configuration (LTM candidate configuration) for one or more candidate cells to the UE 100. The candidate cell configuration may include a random access channel (RACH) configuration, for example, a contention-free random access (CFRA) configuration, to be used in transmitting the RA preamble to a corresponding candidate cell. Such a RACH configuration may be referred to as early UL synchronization configuration (EarlyUlSyncConfig). CFRA is a random access procedure in which dedicated RACH resources (e.g., dedicated preamble sequences and/or dedicated time-frequency resources) are allocated to the UE 100 and no RACH contention occurs among UE 100.

In step S5, the UE 100 saves the LTM candidate cell configuration and transmits an RRC Reconfiguration Complete message to the gNB 200.

In step S6, the UE 100 may perform synchronization processing with respect to the candidate cell before receiving a cell switch command. Such synchronization processing may be referred to as early synchronization (Early sync). Here, the UE 100 may perform downlink synchronization processing for the candidate cell (DL synchronization process) and then perform early timing advance (TA) acquisition with the candidate cell requested by the gNB 200 (source cell). This is done using CFRA triggered by a PDCCH order from the source cell. Note that, when DCI Format 1_0 is used and all the "Frequency domain resource assignment" fields in the DCI are set to "1", the DCI is treated as a PDCCH order. Note that, the PDCCH order may include a cell indicator indicating, when an early UL synchronization configuration (EarlyUlSyncConfig) is configured in the UE 100, to which candidate cell, that is, the corresponding RACH transmission cell, the UE 100 should transmit the random access preamble (RA preamble).

The UE 100 transmits the RA preamble to the specified candidate cell. In order to minimize communication interruption of the source cell caused by the CFRA to the candidate cell, in the early sync, the UE 100 does not receive a random access response (RAR) for acquiring a TA value from the candidate cell. The TA value of the candidate cell (target cell) is indicated in the cell switch command in step S9. Note that the TA value is a value for adjusting the uplink transmission timing of the UE 100.

In step S7, the UE 100 performs layer 1 (L1) measurement in the configured candidate cell and transmits a physical layer measurement report (L1 measurement report) to the gNB 200. The L1 measurement report is transmitted and/or received on L1, which is the PHY layer. For example, the UE 100 transmits L1-RSRP and/or L1-SINR to the gNB 200 on a physical uplink control channel (PUCCH) and/or a physical uplink shared channel (PUSCH).

In step S8, the gNB 200 determines to perform a serving cell switch to the target cell (second cell).

In step S9, the gNB 200 transmits a cell switch command (MAC CE) including the candidate configuration index of the target cell to the UE 100. The cell switch command may include the TA value determined in early synch.

In step S10, the UE 100 switches to the configuration of the target cell. To be specific, the UE 100 is detached from the source cell (first cell) and the configuration of the target cell is applied.

In step S11, if the serving cell switch needs to include execution of a random access procedure (if, for example, the cell switch command does not include a valid TA value), the UE 100 executes the random access procedure with respect to the target cell (random access channel (RACH) based-LTM cell switch). Note that, if the TA of the target cell does not need to be acquired at the time of a serving cell switch (if, for example, the cell switch command includes a valid TA value), the UE 100 can skip the random access procedure (RACH-less LTM cell switch).

In step S12, the UE 100 indicates that the serving cell switch to the target cell has been normally completed. Thereafter, the UE 100 may execute steps S6 to S12 a plurality of times for a subsequent LTM serving cell switch based on the configuration provided in step S4.

Note that, in 3GPP Release 19, introduction of a procedure of conditional LTM (C-LTM) is scheduled to be considered. For example, the gNB 200 configures the execution condition (trigger condition or CondEvent), which is a radio quality condition under which an LTM cell switch is to be performed, in advance for the UE 100 by using an RRC Reconfiguration message in step S4. The UE 100 performs a cell switch in LTM (also referred to as an "LTM cell switch") in response to the satisfaction of the radio quality condition. This makes it possible to skip the operation from L1 measurement report of step S7 to the cell switch command (MAC CE) of step S9. As a result, the cell switch can be sped up and instantaneous interruption of the data communication can be minimized. LTM in the description of the following embodiment may be rephrased as conditional LTM (C-LTM).

### (4) Overview of SON Technology

The mobile communication system 1 according to the present embodiment supports a self-organizing network (SON).

A SON is a technique for automatically optimizing parameters of the network 5, particularly, configuration parameters of the gNB 200. The SON includes mobility robustness optimization (MRO), RACH optimization, and the like. MRO is a technique for adjusting handover-related parameters to minimize handover failures. RACH optimization is a technique for adjusting RACH-related parameters to improve access success probabilities and reduce access delay. In addition, the technique of minimization of drive tests (MDT) technique is used to support the technique of SON. MDT is a technique for collecting measurement information and location information for optimizing a network from the UE 100 in order to reduce the need for drive tests performed manually.

Examples of the function in the technique include immediate MDT, logged MDT, handover failure (HOF) report, and successful handover report (SHR).

In the immediate MDT, the UE 100 in the RRC connected state performs radio quality measurement and reports measurement results to the network 5 (gNB 200) together with location information indicating the geographical location of the UE 100. In the immediate MDT, a measurement configuration and reporting procedure for L3 handover is applied, and the UE 100 transmits an RRC message (L3 measurement report) including location information to the network 5.

In the logged MDT, the UE 100 in the RRC idle state or the RRC inactive state measures the radio qualities and records the measurement results as log information together with the location information of the UE 100, and then the UE 100 transmits an RRC message (UE information response message) including the log information in response to a request from the network 5.

In the HOF report, the UE 100 records relevant information (including a radio quality measurement result) as log information in the event of the occurrence of HOF, and then the UE 100 transmits an RRC message (UE information response message) including the log information in response to a request from the network 5.

In SHR, the UE 100 records relevant information (including a radio quality measurement result) as log information in the event of a barely successful handover, and then the UE 100 transmits an RRC message (UE information response message) including the log information in response to a request from the network 5. A barely successful handover is a state in which optimization is still needed although a handover has been generally successful, and means, for example, a situation in which a handover is successful immediately before various timers related to the handover expire.

With these functions, the network 5 can collect information for automatically adjusting various parameters from the UE 100 and achieve network optimization.

### (5) Operation According to Embodiment

Since the conventional SON technique does not take LTM, which is a newly introduced serving cell switch technology, into consideration, there are challenges in network optimization pertaining to LTM.

To be specific, in the SON technique of the related art, the UE 100 reports one measurement value (i.e., an L3 measurement value) after L3 filtering for each cell (serving cell and/or neighboring cell). For example, in MDT, the UE 100 associates one L3 measurement value with one piece of location information for each cell (serving cell and/or neighboring cell) and reports the association to the network 5. In addition, in HOF report, the UE 100 reports only one L3 measure for each cell (serving cell and/or neighboring cell) at the time of the occurrence of HOF.

On the other hand, one of features of LTM is determination of a cell switch at high speed using an L1 measurement report, and this enables the determination of a cell switch to keep up with instantaneous changes in radio environments (radio qualities). It is considered that the determination of a cell switch in response to such an instantaneous change is highly effective in an environment where fading and/or shadowing is severe, particularly in Frequency Range (FR) 2.

However, since the UE 100 reports only one L3 measurement value for each cell in the SON technique of the related art, the network 5 cannot grasp the situation of instantaneous change in radio environments (radio qualities), which makes it difficult to achieve network optimization for LTM. For example, when the transmission timing of the cell switch command from the gNB 200 cannot be optimized, the cell switch cannot keep up with instantaneous changes, which increases the possibility of failure in the cell switch (e.g., too late cell switch).

Therefore, in the present embodiment, the UE 100 transmits an RRC message including time-series data including a plurality of L1 measurement values to the network 5 for each cell (serving cell and/or neighboring cell). Each L1 measurement value is a radio quality measurement value to which no L3 filtering (L3 filter 13) has been applied. Each L1 measurement value may be a beam measurement value A¹ (beam quality) output by the L1 filter 11. Each L1 measurement value may be a cell quality B output by the beam integration/selection unit 12. Alternatively, each L1 measurement value may be an output C of the L3 filter 13 with zero set as the filter coefficient k.

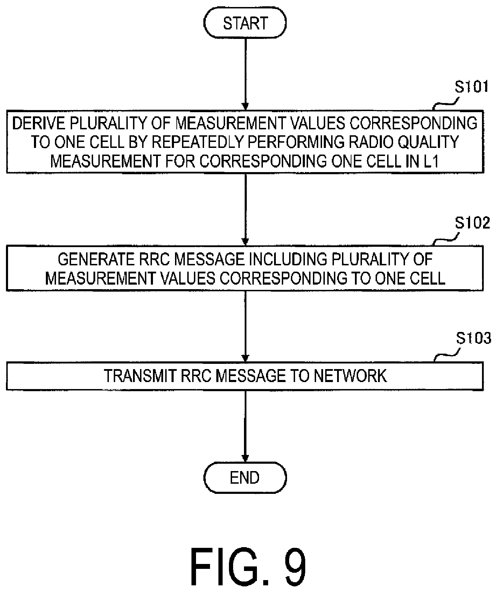

FIG. 9 is a diagram illustrating an operation of the UE 100 according to the present embodiment.

In step S101, the UE 100 derives a plurality of measurement values corresponding to one cell by repeatedly performing the radio quality measurement for one cell in layer 1 (L1). In the present embodiment, each of the plurality of measurement values is an L1 measurement value to which the L3 filter 13 has not been applied. The radio quality measurement may be measurement of received power of a synchronization signal (SS reference signal received power or SS-RSRP) or measurement of received power of a channel state information reference signal (CSI reference signal received power or CSI-RSRP). Note that the L1 measurement value (L1 measurement result) is not limited to such L1-RSRP, and may be another L1 measurement result (e.g., CSI such as reference signal received quality (RSRQ), signal-to-interference-plus-noise ratio (SINR), channel quality indicator (CQI), etc.).

In step S102, the UE 100 generates an RRC message including a plurality of L1 measurement values corresponding to one cell obtained in step S101. The RRC message may include an L1 measurement value list in which a plurality of L1 measurement values are configured in the form of a list. The RRC message may include location information indicating geographical locations of the UE 100 and a plurality of L1 measurement values (L1 measurement value list) associated with the location information. The RRC message may include a set of a cell ID and an L1 measurement value list for each of a plurality of cells (e.g., a serving cell and neighboring cells including LTM candidate cells). Note that, as each entry (L1 measurement value) of the L1 measurement value list, the value of the L1 measurement value may be used as it is, or an index value obtained by quantizing the value of the L1 measurement value may be used. Each entry (L1 measurement value) of the L1 measurement value list may be a differential value (offset value) with one L1 measurement value as a reference.

In step S103, the UE 100 transmits the RRC message obtained in step S102 to the network 5 (gNB 200). The network 5 (gNB 200) receives the RRC message. The RRC message may be a measurement report message or a UE information response message. The measurement report message may be a measurement report message used in immediate MDT. The UE information response message may be a UE information response message used to transmit logged MDT, HOF report, or SHR log information.

According to such an operation, the network 5 can grasp the situation of an instantaneous change in the radio environment (radio quality), which enables network optimization pertaining to LTM. Note that the UE 100 that performs such an operation includes the controller 130 that derives a plurality of measurement values corresponding to one cell by repeatedly performing radio quality measurement for one cell in L1 and generates an RRC message including the plurality of measurement values corresponding to one cell, and the transmitter 120 that transmits the RRC message to the network 5. On the other hand, the gNB 200 includes the receiver 220 that receives the RRC message.

### (5.1) Specific Example of Operation According to Embodiment

A first operation pattern and a second operation pattern will be described as specific examples of the operation of according to the embodiment.

### (5.1.1) First Operation Pattern

The first operation pattern is an operation pattern mainly assuming immediate MDT and logged MDT (these are also simply referred to as "MDT").

In MDT of the related art, measurement results reported by the UE 100 to the network 5 are L3 measurement values after L3 filtering.

In addition, in immediate MDT of the related art, the UE 100 transmits an L3 measurement report message including location information and one measurement value per one measured cell to the network 5. The periodicity of the L3 measurement report is configured from the network 5 to UE 100 and is equal to or greater than 120 ms in the technical specification of 3GPP.

In addition, in the logged MDT of the related art, the UE 100 records (also referred to as "logging") the location information, the time stamp, and one measurement value per one measured cell as log information, and transmits a UE information response message including the log information to the network 5. A logging interval, which is set by the network 5 for the UE 100, is 320 ms or longer in the 3GPP technical specifications.

Here, when considering application of MDT to LTM (particularly, optimization of a cell switch command based on an L1 measurement report) and/or future model learning on the network 5 side (e.g., artificial intelligence (AI)/machine learning (ML) for mobility), low resolution of radio quality measurement data, that is, a long interval on the time axis and averaging using L3 filtering become problems.

The UE 100 derives the L1 measurement value by performing radio quality measurement in L1 at a shorter time interval than the L3 measurement report interval (periodicity) and the logging interval. Therefore, in the first operation pattern, the UE 100 reports the L1 measurement value (to be specific, the L1 measurement value to which L3 filtering has not been applied) derived at such short intervals to the network 5.

However, when granting location information (a time stamp in the case of logged MDT) to each L1 measurement value, there is a problem that the amount of data that the UE 100 should report to the network 5 in an RRC message increases (i.e. overhead increases). Thus, in the first operation pattern, the UE 100 transmits, to the network 5, an RRC message including the location information (the time stamp in the case of the logged MDT) and the L1 measurement value list associated with the location information. This makes it possible to associate a plurality of L1 measurement values with one piece of location information (and one time stamp), and thus overhead can be reduced.

As described above, in the operation pattern 1, in MDT, the UE 100 reports the L1 measurement value to the network 5 in the form of a list. In particular, the UE 100 reports a list of L1 measurement values pertaining to one cell to the network 5 in association with one piece of location information (and one time stamp).

In the first operation pattern, the network 5 (gNB 200) transmits, to the UE 100, configuration information for configuring at least one of MDT measurement, reporting, and logging in the UE 100. The UE 100 receives the configuration information from the network 5. The configuration information includes information for configuring a measurement interval that is an interval at which the UE 100 performs radio quality measurement (at least one of measurement, reporting, and logging of MDT). The information for configuring a measurement interval includes information indicating a reference measurement interval and information indicating how many times the radio quality measurement is to be performed within the reference measurement interval. For example, the network 5 configures the UE 100 on how many times L1 measurement is reported/logged in an interval which is a conventional measurement/reporting/logging interval.

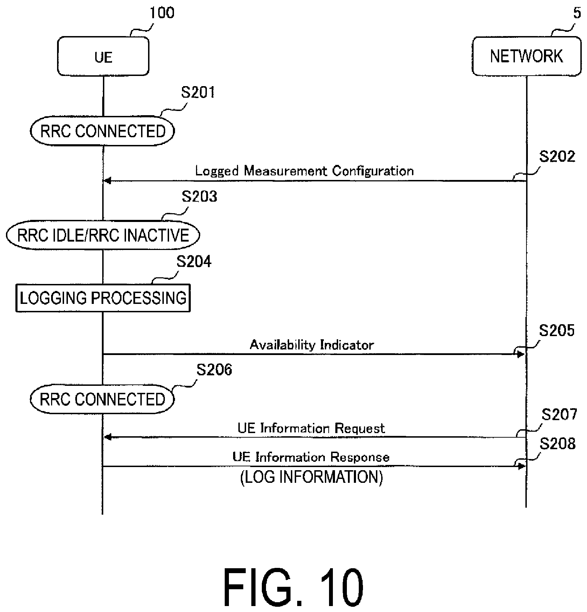

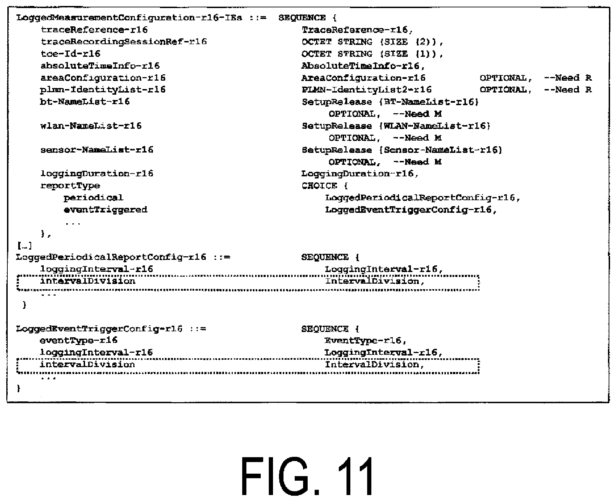

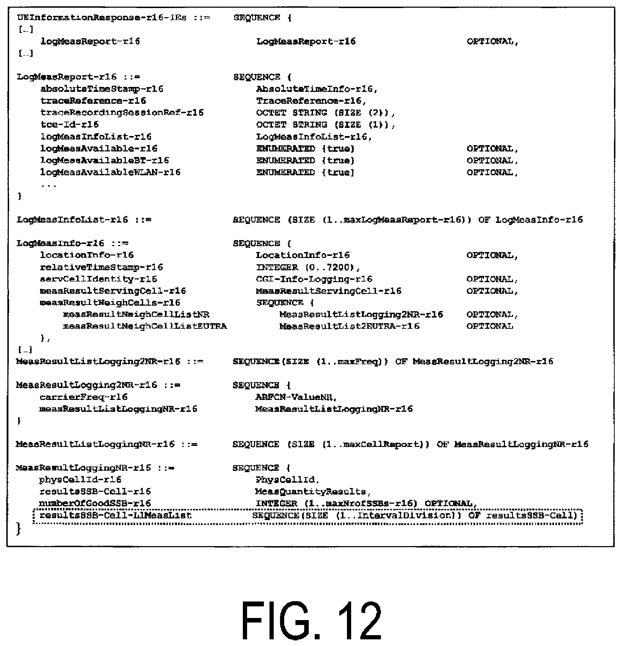

FIG. 10 is a diagram illustrating an example of the first operation pattern according to the embodiment. Here, logged MDT will be described as an example. FIG. 11 is a diagram for describing a Logged Measurement Configuration message pertaining to the first operation pattern. FIG. 12 is a diagram for describing a UE Information Response message pertaining to the first operation pattern.

In step S201, the UE 100 is in the RRC connected state in the cell of the network 5 (gNB 200) as shown in FIG. 10.

In step S202, the network 5 (gNB 200) transmits a Logged Measurement Configuration message that is an RRC message including configuration information for configuring measurement and logging of logged MDT to the UE 100. The UE 100 receives the Logged Measurement Configuration message.

As illustrated in FIG. 11, the Logged Measurement Configuration message includes configuration of a logging interval (LoggingInterval). In the first operation pattern, the Logged Measurement Configuration message further includes information indicating the number of divisions of the logging interval (IntervalDivision). The information may be the number of entries on the L1 measurement result list. Note that, instead of (or in addition to) the number of divisions of the logging interval, an acquisition interval of the L1 measurement results (i.e., a storage interval for an entry on the L1 measurement result list) may be used.

In step S203, the UE 100 transitions from the RRC connected state to the RRC idle state or the RRC inactive state as shown in FIG. 10.

In step S204, the UE 100 starts periodic logging processing of the L1 measurement result according to the content configured in the Logged Measurement Configuration message. When an event is configured by the Logged Measurement Configuration message, the UE 100 may start the periodic logging processing when triggered by satisfaction of the event.

The UE 100 may perform L1 measurement at an interval determined by "measurement interval (Logging Interval) ÷ information of the number of divisions (Interval Division)" and L1 measurement values may be logged. As shown in FIG. 12, the UE 100 stores one L1 measurement report result (resultsSSB-Cell) in each entry of a list that stores L1 measurement results (resultsSSB-Cell-L1MeasList). One piece of location information (locationInfo) and one time stamp (relativeTimeStamp) are associated with the list.

Subsequently, in step S205, the UE 100 transmits, to the network 5 (gNB 200), a notification indicating that the log information is being held (Availability Indicator) as illustrated in FIG. 10. The network 5 (gNB 200) receives the notification (Availability Indicator). For example, the UE 100 may include the notification (Availability Indicator) in the RRC Setup Complete message and transmit the notification to the network 5 (gNB 200) at the time of transition from the RRC idle state to the RRC connected state. The UE 100 may include the notification (Availability Indicator) in an RRC Resume Complete message and transmit the notification to the network 5 (gNB 200) at the time of transition from the RRC inactive state to the RRC connected state. The UE 100 in the RRC connected state may transmit the notification (Availability Indicator) to the network 5 (gNB 200) at the time of RRC re-establishment or at the time of successful handover.

In step S206, the UE 100 transitions to the RRC connected state.

In step S207, the network 5 (gNB 200) transmits, to the UE 100, a message for requesting transmission of the log information (UE Information Request message). The UE 100 receives the message (UE Information Request message).

In step S208, the UE 100 transmits a message including the log information (UE Information Response message or another RRC message) to the network 5 (gNB 200). The network 5 (gNB 200) receives the message. The network 5 (gNB 200) may acquire the log information in the message, and transmit the acquired log information to the CN 20 or an Operations, Administration, and Maintenance (OAM). The network 5 may optimize various network parameters pertaining to LTM based on the log information.

Although logged MDT has been described as an example in the illustrated operation example, such an operation may be applied to immediate MDT. In this case, the UE 100 performs measurement and reporting while maintaining the RRC connected state. Further, the above-described configuration information is rephrased as a measurement configuration, the logging interval is rephrased as a report interval (periodicity), and the UE information response message is rephrased as a measurement report message.

### (5.1.2) Second Operation Pattern

The second operation pattern is described mainly with respect to differences from the first operation pattern. The second operation pattern is an operation pattern mainly assuming HOF report and SHR. Although the UE 100 periodically performs measurement reporting or logging in the first operation pattern, in the second operation pattern, the UE 100 performs logging only once when a predetermined event (e.g., failure of a cell switch or success of a cell switch) occurs.

In HOF report and SHR of the related art, the UE 100 reports L3 measurement results at the time point at which an event occurs to the network 5 in snapshots. For example, the UE 100 reports, to the network 5, only one L3 measurement result of each of the serving cell and neighboring cells at the time point at which HOF occurs.

On the other hand, in LTM, the gNB 200 determines an LTM cell switch based on the L1 measurement report. The UE 100 performs L1 measurement at short intervals, and L1 measurement values vary greatly in each measurement. Thus, time-series data of L1 measurement values over a certain period of time when an event occurs may be beneficial for performing network optimization pertaining to LTM.

Thus, in the second operation pattern, the UE 100 records, as log information, the time-series data of the L1 measurement values for a certain period of time before and after the occurrence of the event. To be more specific, the UE 100 detects an event related to a serving cell switch, records a plurality of L1 measurement values (L1 measurement value list) in a certain period of time before and/or after the occurrence of the event as log information, generates an RRC message (UE Information Response message) including the log information, and transmits the RRC message to the network 5 (gNB 200). The event may be any one of a failure of the cell switch, a success of the cell switch, and satisfaction of a trigger condition for the cell switch.

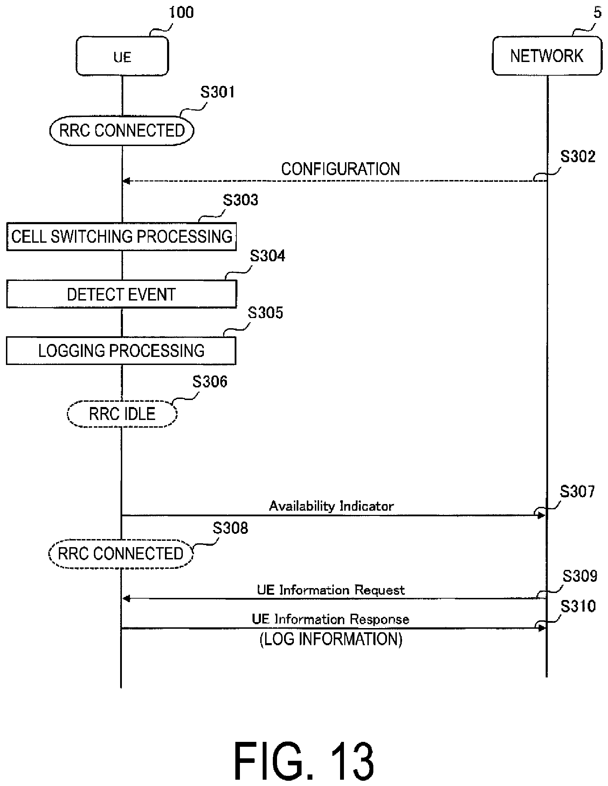

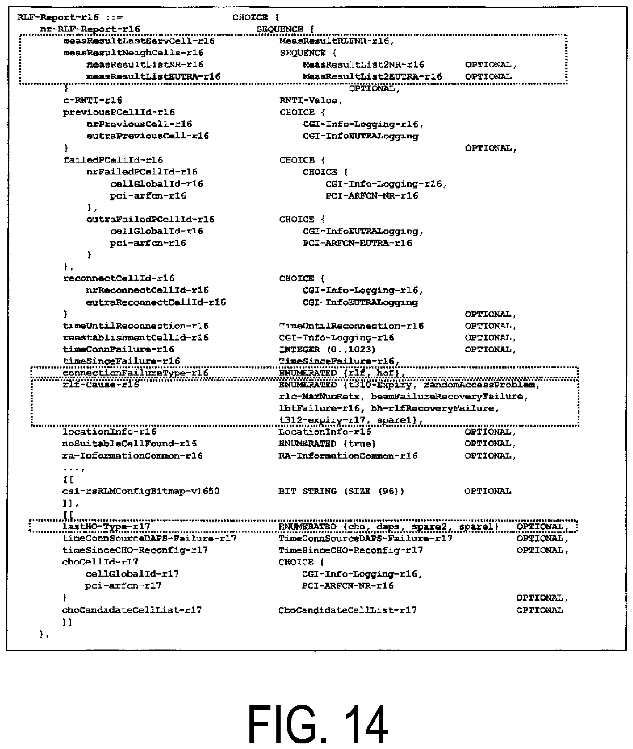

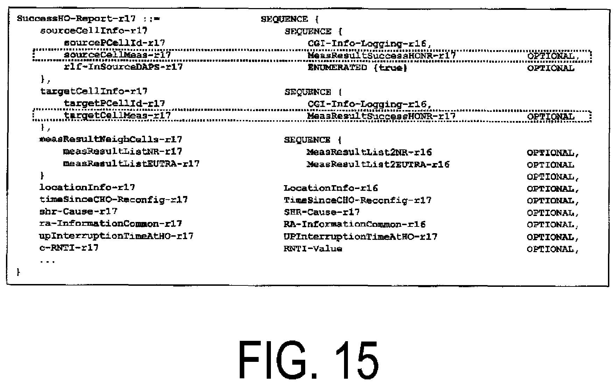

FIG. 13 is a flowchart showing an example of the second operation pattern according to the embodiment. FIG. 14 is a diagram for describing HOP report according to the second operation pattern. FIG. 15 is a diagram for describing SHR according to the second operation pattern. Here, although an LTM cell switch is mainly assumed, L3 handover may be assumed.

In step S301, the UE 100 is in the RRC connected state in the cell of the network 5 (gNB 200) as shown in FIG. 13.

In step S302, the network 5 (gNB 200) may transmit an RRC message (RRC Reconfiguration message) including configuration information for configuring HOF report and/or SHR to the UE 100. The UE 100 may receive the RRC message.

The configuration information may include a configuration of a logging event and/or a configuration of a logging period.

The configuration of a logging event is information for designating an event to be logged. An event to be designated may be at least one of a success of a cell switch and a failure of a cell switch. The event to be designated may be that a trigger condition for a cell switch has been satisfied. When the configuration is made, the UE 100 may start temporarily holding the L1 measured result. Alternatively, the UE 100 may start temporarily holding the L1 measurement result when detecting a measurement start trigger included in the configuration. The measurement start trigger may be any one of Early TA (i.e., when CFRA is performed and/or when UE-based TA is measured) and a radio-quality threshold value (e.g., when the RSRP of the serving cell falls below the threshold value and/or when the RSRP of an LTM candidate cell and/or a neighboring cell exceeds the threshold value, or the trigger may be under an existing Event A3 trigger condition or the like). When the UE 100 temporarily holds the L1 measurement results, the L1 measurement results are sequentially stored in internal variables (as entries of the list). The UE 100 may sequentially delete the L1 measurement results exceeding the logging period (certain period of time in the past) from the internal variables (entries of the list). Furthermore, when the occurrence of a logging event is detected in S304 to be described below, the past L1 measurement results may be taken out from the internal variables, stored in the L1 measurement value list, and reported to the network.

The configuration of the logging period may include information indicating a certain period of time in the past and/or information indicating a certain period of time in the future with reference to the time point at which the logging event is satisfied.

In step S303, the UE 100 triggers (attempts) a cell switch. The UE 100 may trigger a cell switch in response to reception of a cell switch command from the network 5 (gNB 200). In the case of C-LTM (or conditional L3 handover (CHO)), the UE 100 may trigger a cell switch in response to the satisfaction of a trigger condition configured by the network 5 (gNB 200).

In step S304, the UE 100 detects the occurrence of the logging event. The logging event is configured by the network 5 (gNB 200), and may be at least one of a success of a cell switch and a failure of a cell switch. The logging event may be that the trigger condition for a cell switch has been satisfied.

In step S305, the UE 100 generates log information in response to the occurrence of the logging event and records the log information. The log information includes a plurality of L1 measurement results (L1 measurement value list) for a certain period of time before and after the logging event.

The log information may further include information indicating the event type. The information indicating the event type may be information indicating success or failure of an LTM cell switch (the state at the time of completion of the LTM procedure). The information may be information for each procedure called L3 handover or LTM. The information may be information for each function indicating C-LTM execution trigger or CHO execution trigger. The information may be information of event details (trigger type such as A3 trigger).

In the case of C-LTM, the log information may further include information indicating the time period from when the gNB 200 configures C-LTM to when the configured event occurs.

As illustrated in FIG. 14, in the case of a failure of a cell switch, the UE 100 may include the L1 measurement value list as the measurement result of the serving cell (measResultLastServCell) in the log information. The UE 100 may include the L1 measurement value list in each entry of the list of measurement results of neighboring cells (measResultListNR). Note that, in the case of a failure of an LTM cell switch, the UE 100 may set "hof" as a connection failure type (connectionFailureType) in the log information. The UE 100 may set "LTM" (or "C-LTM") as the type of failed handover (lastHO-Type). The UE 100 may set information specific to the LTM cell switch as a cause for radio link failure (RLF) (rlf-Cause) due to the LTM cell switch in the log information (see the third variation to be described below).

In the case of a success of a cell switch, the UE 100 may include an L1 measurement value list as the measurement result (sourceCellMeas) of the source cell in the log information as shown in FIG. 15. The UE 100 may include an L1 measurement value list as the measurement result (targetCellMeas) of the target cell. Also, the L1 measurement value list may be included as a measurement result of a candidate cell (an LTM candidate cell, a C-LTM candidate cell, a CHO candidate cell, a CPAC candidate cell, or the like). When there are a plurality of candidate cells, the L1 measurement list may be included for each candidate cell. The L1 measurement value list of the cell that is not a target cell (the cell corresponding to the candidate cell configuration held by the UE 100 other than the applied target cell configuration) among the candidate cells may be included. Note that, in the case of a success of a cell switch, the UE 100 may set "LTM" (or "C-LTM") as the type of successful handover in the log information.

Thereafter in step S306, the UE 100 may transition to the RRC idle state in the case of the failure of a cell switch, as illustrated in FIG. 13.

In step S307, the UE 100 transmits, to the network 5 (gNB 200), a notification indicating that the log information is being held (Availability Indicator). The network 5 (gNB 200) receives the notification (Availability Indicator). For example, the UE 100 may include the notification (Availability Indicator) in the RRC Setup Complete message and transmit the notification to the network 5 (gNB 200) at the time of transition from the RRC idle state to the RRC connected state. The UE 100 may include the notification (Availability Indicator) in an RRC Resume Complete message and transmit the notification to the network 5 (gNB 200) at the time of transition from the RRC inactive state to the RRC connected state. The UE 100 in the RRC connected state may transmit the notification (Availability Indicator) to the network 5 (gNB 200) at the time of RRC re-establishment or at the time of successful handover.

In step S308, the UE 100 may transition to the RRC connected state.

In step S309, the network 5 (gNB 200) transmits, to the UE 100, a message for requesting transmission of the log information (UE Information Request message). The UE 100 receives the message (UE Information Request message).

In step S310, the UE 100 transmits a message including the log information (UE Information Response message or another RRC message) to the network 5 (gNB 200). The network 5 (gNB 200) receives the message. The network 5 (gNB 200) may acquire the log information in the message, and transmit the acquired log information to the CN 20 or OAM. The network 5 may optimize various network parameters pertaining to LTM based on the log information.

### (6) Variations

Variations of the embodiment will be described mainly with respect to differences from the embodiment described above. The following variations may be on the premise of the operation of including the L1 measurement value list in the RRC message (Measurement Report message or UE Information Response message) as in the above-described embodiment, or may not be on the premise of the operation.

With regard to the second operation pattern described above, an example has been described, in which HOF report and SHR are mainly assumed, and when a predetermined event (e.g., handover failure or handover success) for performing logging occurs, the UE 100 includes a plurality of L1 measurement results (L1 measurement value list) for a certain period of time before and after the event in the log information. In contrast, in the variations, when the event occurs, the UE 100 includes information that is different from the L1 measurement value list and is related to the LTM cell switch in the log information.

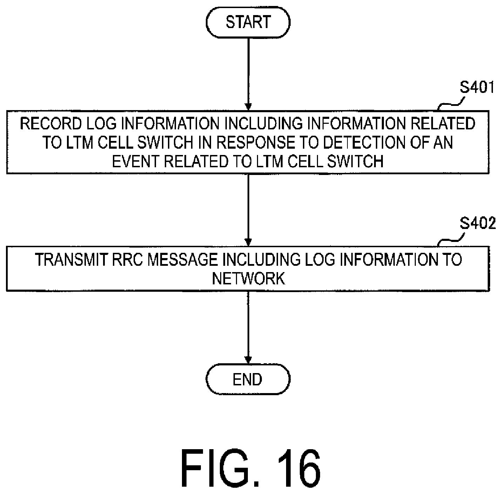

FIG. 16 is a diagram illustrating an operation of the UE 100 according to a variation.

In step S401, the UE 100 records log information including information related to the LTM cell switch in response to detection of an event (logging event) related to the LTM cell switch. The logging event is configured by the network 5 (gNB 200), and may be at least one of a success of a cell switch and a failure of a cell switch. The logging event may be that the trigger condition for a cell switch has been satisfied. The log information may include information on the source cell (cell ID, measurement results, etc.) and/or information on the target cell (cell ID, measurement results, etc.).

In a first variation, the log information includes information indicating a subsequent cell switch that is a switch of the serving cell without an RRC reconfiguration by the network 5 after the cell switch based on an RRC configuration by the network 5. The subsequent cell switch may be a subsequent LTM cell switch (Subsequent LTM).

In a second variation, the log information includes information on the optimal cell switch timing estimated by the UE 100 and/or information indicating a time period from when the UE 100 detects a reporting event of a measurement report for the LTM cell switch to when the measurement report is transmitted to the network 5.

In a third variation, the log information includes at least one selected from the group consisting of information indicating whether UE-based TA measurement for the UE 100 itself to derive a TA value to be applied to a target cell of an LTM cell switch has succeeded, information on the TA value applied to the target cell, and information indicating whether a random access procedure performed on the target cell is contention-free random access (CFRA) or contention-based random access (CBRA).

In step S402, the UE 100 transmits the RRC message including the log information to the network 5 (gNB 200). The RRC message may be a UE Information Response message.

### (6.1) First Variation

Although, in a conditional L3 handover (CHO) and conditional PSCell addition/change (CPAC) of the related art, the network 5 (gNB 200) configures an RRC configuration including trigger conditions and the like for the UE 100, the UE 100 deletes the configuration at the time point when access to the target cell succeeds. Therefore, in order to perform the next CHO/CPAC or the like, the network 5 (gNB 200) needs to perform an RRC reconfiguration for the UE 100.

On the other hand, in LTM (and CPAC) of the related art, a method (in the case of LTM, also referred to as "subsequent LTM") has been specified in which the UE 100 holds the RRC configuration including trigger conditions and the like even after accessing the target cell and can further a switch to another cell using the RRC configuration. This eliminates the need to perform RRC reconfiguration for the next LTM (and CPAC), reduces signaling, and speeds up the LTM cell switch (and CPAC).

Here, when a subsequent LTM cell switch fails, the reason that the cell switch has failed because the held RRC configuration was inappropriate (e.g., too old) is conceivable. In such a case, the network 5 (gNB 200) may have been needed to perform the RRC reconfiguration for the UE 100. However, in the SON technique of the related art, the network 5 cannot grasp whether the failure/success of a cell switch is failure/success of the first cell switch or failure/success in the subsequent LTM cell switch, and thus there is a problem that it is difficult to perform network optimization for the subsequent LTM.

Therefore, in the first variation, when a logging event (failure/success of a cell switch) occurs in the subsequent cell switch, the UE 100 includes information indicating that the failure/success corresponds to the subsequent cell switch in the log information.

A specific example of the operation according to the first variation will be described with reference to FIG. 13. Here, although the case of the subsequent LTM has been described as an example, the same operation may be applied to a subsequent PSCell change (Subsequent CPC) or a subsequent PSCell addition (Subsequent CPA).

In step S301, the UE 100 is in the RRC connected state in the cell of the network 5 (gNB 200).

In step S302, the network 5 (gNB 200) may transmit an RRC message (RRC Reconfiguration message) including configuration information for configuring HOF report and/or SHR to the UE 100. The UE 100 may receive the RRC message. The configuration information may include a configuration of a logging event. The configuration of a logging event is information for designating an event to be logged. An event to be designated may be at least one of a success of a cell switch and a failure of a cell switch. The event to be designated may be that a trigger condition for a cell switch has been satisfied. The configuration information may include information for configuring logging for the subsequent LTM.

In step S303, the UE 100 triggers (attempts) a subsequent LTM cell switch. The subsequent LTM cell switch is an operation of performing an LTM cell switch without an RRC reconfiguration by the network 5 after the LTM cell switch based on the RRC configuration (LTM candidate cell configuration in step S4 of FIG. 8) by the network 5. That is, the UE 100 reuses the RRC configuration (LTM candidate cell configuration) by the network 5 to perform (attempt) the subsequent LTM cell switch. For example, the UE 100 holds the LTM candidate cell configuration, and performs (attempts) an LTM cell switch based on the LTM candidate cell configuration in response to the reception of a cell switch command from the serving cell.

In step S304, the UE 100 detects the occurrence of a logging event. The logging event may be at least one of a success of the subsequent LTM cell switch and a failure of the subsequent LTM cell switch.

In step S305, the UE 100 generates log information in response to the occurrence of the logging event and records the log information. In this variation, the log information includes information indicating a subsequent LTM cell switch. The information may be 1-bit information (true/false) indicating that the subsequent LTM cell switch has failed/succeeded. The information may be information indicating the round of the subsequent LTM cell switch (e.g., "second round") that has failed/succeeded. For example, in the case of a failure of a subsequent LTM cell switch, the UE 100 may set "hof" as a connection failure type (connectionFailureType) in the log information. The UE 100 may set "subsequent LTM" as the type of failed handover (lastHO-Type). When the subsequent LTM cell switch has succeeded, the UE 100 may set "subsequent LTM" as the type of successful handover in the log information.

The following operations are same as those of the second operation pattern described above.

### (6.2) Second Variation

In LTM, the network 5 instructs the UE 100 to perform a cell switch using a cell switch command based on an L1 measurement report (see step S7 to step S9 in FIG. 8). Since LTM is intended to deal with instantaneous change in radio environments, the transmission timing of the cell switch command from the network 5 cannot follow changes in the radio environments, and thus there is concern that a failure of the cell switch (particularly, a cell switch that is too late) may occur.

In addition, an event-triggered L1 measurement report may be configured by the network 5 for the UE 100. For example, the network 5 configures a trigger condition (report event) of the L1 measurement report for the UE 100, and the UE 100 transmits the L1 measurement report to the network 5 in response to the configured trigger condition being satisfied (occurrence of the configured report event). Here, if a delay from the occurrence of the reporting event in the UE 100 to the transmission of the L1 measurement report to the network 5 is significant, there is concern that a failure of the cell switch (particularly, a cell switch that is too late) may occur.

However, in the SON technique of the related art, the network 5 cannot grasp such situations, and thus there is a problem that network optimization pertaining to LTM is difficult.

Therefore, in the second variation, the UE 100 includes information on the optimal cell switch timing estimated by the UE 100 and/or information indicating a time period from when the UE 100 detects the reporting event of the L1 measurement report to when the UE 100 transmits the L1 measurement report to the network 5 (i.e., a delay time) in the log information.

A specific example of the operation according to the second variation will be described with reference to FIG. 13, focusing mainly on differences from the operation of the first variation.

In step S301, the UE 100 is in the RRC connected state in the cell of the network 5 (gNB 200).

In step S302, the network 5 (gNB 200) may transmit an RRC message (RRC Reconfiguration message) including configuration information for configuring HOF report and/or SHR to the UE 100. The UE 100 may receive the RRC message. The configuration information may include a configuration of a logging event. The configuration of a logging event is information for designating an event to be logged. An event to be designated may be at least one of a success of the cell switch and a failure of the cell switch. The event to be designated may be that a trigger condition for the cell switch has been satisfied.

The RRC message may include information for configuring logging with respect to the optimal cell switch timing and/or the delay time of the L1 measurement report. The configuration information may include information for configuring model inference using an AI/ML model for deriving the optimal cell switch timing, for example, a model ID or a functional ID of the AI/ML model. The AI/ML model may be an AI/ML model for deriving the optimal cell switch timing based on the L1 measurement result. The UE 100 may infer the optimal cell switch timing using the AI/ML model.

The RRC message may include information for configuring a trigger condition (event) for transmitting the L1 measurement report to the network 5 (gNB 200). The UE 100 may transmit the L1 measurement report to the network 5 (gNB 200) in response to the occurrence of the event, and may trigger an LTM cell switch by receiving a cell switch command from the network 5 (gNB 200).

In step S303, the UE 100 triggers (attempts) an LTM cell switch.

In step S304, the UE 100 detects the occurrence of the logging event. The logging event may be at least one of a success of the LTM cell switch and a failure of the LTM cell switch.

In step S305, the UE 100 generates log information in response to the occurrence of the logging event and records the log information.

In the present variation, the log information may include information indicating the optimal cell switch timing estimated by the UE 100. The information indicating the optimal cell switch timing may be an absolute time of the optimal cell switch timing. The information may be a relative time (an offset time based on a time point at which the cell switch command is actually received). A radio frame (SFN), a slot, or a symbol may represent these pieces of time information. The log information may include radio environment, for example, radio quality measurement values (such as RSRP) for the serving cell and/or neighboring cells.

In the present variation, the log information may include a measurement value of a delay time from a timing (start timing) of an event trigger of the L1 measurement report to completion (end timing) of transmission of the L1 measurement report.

The following operations are same as those of the second operation pattern described above.

Although the LTM cell switch has been described in the present variation, the operation according to the present variation may be applied to L3 handover. In this case, the L3 measurement report may be used instead of the L1 measurement report. In addition, the end timing at which the delay time is measured may be a timing at which the UE 100 receives a transmission acknowledgment (Ack) for the L3 measurement report from the network 5 (gNB 200).

### (6.3) Third Variation

The third modification is an example related to UE-based TA measurement in LTM. The UE-based TA measurement is for the UE 100 to derive the TA value to be applied to a target cell of an LTM cell switch.

In LTM of the related art, the UE 100 may initiate an uplink TA acquisition (referred to as "early TA") procedure for one or more candidate cells (second cells) different from the current serving cell (first cell), depending on the configuration by the gNB 200. If a candidate cell has the same TA value as the current serving cell or TA value = 0, the early TA acquisition procedure is not needed. The gNB 200 may request the UE 100 to perform early TA acquisition by the candidate cell before a cell switch. The early TA acquisition procedure is realized by CFRA triggered by PDCCH order as described above or UE-based TA measurement configured by RRC.

In CFRA triggered by PDCCH order, the gNB 200 to which a candidate cell belongs calculates the TA value and transmits the TA value to another gNB 200 to which the serving cell belongs. The serving cell transmits the TA value using a cell switch command (MAC CE) when an LTM cell switch is triggered.

In UE-based TA measurement, the UE 100 performs TA measurement in a candidate cell after being configured by RRC, but the exact time at which the UE 100 performs the TA measurement depends on the implementation of the UE 100. Upon receiving the cell switch command, the UE 100 applies the TA value measured by itself and performs RACH-less LTM.

Depending on whether a valid TA value is available, the UE 100 performs either a RACH-less LTM cell switch or a RACH-based LTM cell switch. If the cell switch command specifies the TA value, the UE 100 applies the TA value according to the specification. If UE-based TA measurement is configured but the cell switch command specifies no TA value, the UE 100 applies the TA value measured by itself if available. If a valid TA value is not available, the UE 100 performs a RACH-based LTM cell switch.

Thus, in LTM of the related art, UE-based TA measurement may be configured for the UE 100. However, in the SON technique of the related art, since the network 5 cannot grasp whether the UE-based TA measurement has succeeded, network optimization (e.g., whether the UE-based TA measurement is configured and optimization of the configuration content) pertaining to LTM is difficult to perform.

In addition, in the SON technique of the related art, for UE-based TA measurement, the network 5 cannot grasp what TA value the UE 100 has applied to the target cell, and therefore, network optimization pertaining to LTM is difficult to perform.

Further, in LTM of the related art, the UE 100 may perform a RACH-based LTM cell switch. In this case, the UE 100 performs the random access procedure of either type of CFRA and CBRA on the target cell. However, in the SON technique of the related art, especially when the random access procedure fails, which type of random access procedure of CFRA and CBRA the UE 100 performed on the target cell is difficult to ascertain, and thus network optimization pertaining to LTM is difficult to perform.

Therefore, in the third variation, the UE 100 includes at least one selected from the group consisting of information indicating whether the UE-based TA measurement has succeeded, information on the TA value applied to the target cell, and information indicating whether the random access procedure performed on the target cell is the CFRA or the CBRA in the log information.

A specific example of the operation according to the third variation will be described with reference to FIG. 13, focusing mainly on the differences from the operations of the first and second variations.

In step S301, the UE 100 is in the RRC connected state in the cell of the network 5 (gNB 200).

In step S302, the network 5 (gNB 200) may transmit an RRC message (RRC Reconfiguration message) including configuration information for configuring HOF report and/or SHR to the UE 100. The RRC message may include information for configuring UE-based TA measurement. The UE 100 may receive the RRC message. The configuration information may include a configuration of a logging event. The configuration of a logging event is information for designating an event to be logged. An event to be designated may be at least one of a success of the cell switch and a failure of the cell switch. The event to be designated may be that a trigger condition for the cell switch has been satisfied. The configuration information may include information for configuring to record at least one selected from the group consisting of information indicating whether the UE-based TA measurement has succeeded, information on the TA value applied to the target cell, and information indicating whether the random access procedure performed on the target cell is CFRA or the CBRA.

In step S303, the UE 100 triggers (attempts) an LTM cell switch by performing UE-based TA measurement and receiving a cell switch command from the network 5. The LTM cell switch is either a RACH-less LTM cell switch or a RACH-based LTM cell switch.

In step S304, the UE 100 detects the occurrence of the logging event. The logging event may be at least one of a success of the LTM cell switch and a failure of the LTM cell switch.

In step S305, the UE 100 generates log information in response to the occurrence of the logging event and records the log information. In the present variation, the log information may include information indicating whether the UE-based TA measurement has succeeded. The log information may include information on the TA value applied at the time of access to the target cell. The information may be the TA value. The information may be information on the source of the TA value (any of the RRC configuration, the cell switch command (MAC CE), and the UE-based TA measurement). The log information may include information indicating which of CFRA and CBRA has been performed in the RACH-based LTM cell switch.

The following operations are same as those of the second operation pattern described above.

### (7) Other Embodiments

In the above embodiments, LTM (and conditional LTM) has been mainly described. However, the operations according to the above-described embodiments may be applied to L3 handover (and conditional L3 handover). Further, an L3 measurement value list including a plurality of L3 measurement values may be used, instead of an L1 measurement value list including a plurality of L1 measurement values. In addition, the present invention may be applied to addition or change of a primary secondary cell (PSCell) on the premise of dual connectivity (DC), or may be applied to addition of a conditional PSCell or change of a conditional PSCell.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed. The order of the steps may be appropriately changed in each flow.

Although the example in which the base station is an NR base station (gNB) has been described in the embodiments and examples described above, the base station may be an LTE base station (eNB) or a 6G base station. Further, the base station may be a relay node such as an Integrated Access and Backhaul (IAB) node. The base station may be a DU of the IAB node. In addition, the UE 100 may be a Mobile Termination (MT) of the IAB node. That is, the UE 100 may be a terminal function unit (a type of communication module) for a base station to control a repeater that relays signals. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processing operations performed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM and/or a DVD-ROM. In addition, circuits for executing processing operations performed by the UE 100 or the gNB 200 may be integrated, and at least a part of the UE 100 and the gNB 200 may be implemented as a semiconductor integrated circuit (chipset or System on a chip (SoC)).

The functions achieved by the UE 100 or the gNB 200 may be implemented in a circuitry or a processing circuitry programmed to perform the described functions, including a general-purpose processor, a special-purpose processor, an integrated circuit, application specific integrated circuits (ASICs), a central processing unit (CPU), a conventional circuit, and/or combinations thereof. The processor may include transistors and/or other circuits and may be considered a circuitry or a processing circuitry. The processor may be a programmed processor that executes a program stored in the memory. In the present specification, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items". Further, the term "or" used in the present disclosure is not intended to be "exclusive or". Furthermore, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles shall include the plural unless clearly indicated otherwise in context.

The embodiments have been described above in detail with reference to the drawings, but specific configurations are not limited to those described above, and various design variation can be made without departing from the gist of the present disclosure.

The present application claims priority to Japanese Patent Application No. 2024-020672 (filed on February 14, 2024), the contents of which are incorporated herein by reference in their entirety.

### (8) Supplementary Notes

Features relating to the embodiments described above are described below as supplementary notes.

### Supplementary Note 1

A communication method performed by a user equipment of a mobile communication system, the communication method including the steps of:
deriving a plurality of measurement values corresponding to one cell by repeatedly performing radio quality measurement for the one cell in layer 1 (L1);
generating a radio resource control (RRC) message including the plurality of measurement values corresponding to the one cell; and
transmitting the RRC message to a network.

### Supplementary Note 2

The communication method described in Supplementary Note 1, in which each of the plurality of measurement values is an L1 measurement value to which a layer 3 (L3) filter has not been applied.

### Supplementary Note 3

The communication method described in Supplementary Note 2, in which the RRC message includes an L1 measurement value list including the plurality of measurement values in the form of a list.

### Supplementary Note 4

The communication method described in any one of Supplementary Notes 1 to 3, in which the RRC message includes location information indicating a geographical location of the user equipment and the plurality of measurement values associated with the location information.

### Supplementary Note 5

The communication method described in any one of Supplementary Notes 1 to 4, in which the radio quality measurement is measurement of received power of a synchronization signal or measurement of received power of a channel state information reference signal.

### Supplementary Note 6

The communication method described in any one of Supplementary Notes 1 to 5, in which the RRC message is a Measurement Report message or a UE Information Response message.

### Supplementary Note 7

The communication method described in any one of Supplementary Notes 1 to 6, wherein
the user equipment receives configuration information on the radio quality measurement from the network, and
the configuration information includes information for configuring a measurement interval that is a time interval at which the user equipment performs the radio quality measurement.

### Supplementary Note 8

The communication method described in Supplementary Note 7, in which the information for configuring the measurement interval includes information indicating a reference measurement interval and information indicating how many times the radio quality measurement is to be performed within the reference measurement interval.

### Supplementary Note 9

The communication method described in any one of Supplementary Notes 1 to 8, in which the user equipment:
detects an event related to a switch of a serving cell of the user equipment; and
generates the RRC message including the plurality of measurement values in a certain period of time before and/or after the occurrence of the event.

### Supplementary Note 10

The communication method described in Supplementary Note 9, in which the event is any one of a failure of the switch, a success of the switch, and satisfaction of a trigger condition for the switch.

### Supplementary Note 11

A user equipment used in a mobile communication system, the user equipment including:
a controller that derives a plurality of measurement values corresponding to one cell by repeatedly performing radio quality measurement for the one cell in layer 1 (L1) and generates a radio resource control (RRC) message including the plurality of measurement values corresponding to the one cell; and
a transmitter that transmits the RRC message to a network.

### Supplementary Note 12

A network node used in a mobile communication system, the network node including:
a receiver that receives, from a user equipment, a radio resource control (RRC) message including a plurality of measurement values obtained by the user equipment repeatedly performing radio quality measurement for one cell in layer 1 (L1).

### REFERENCE SIGNS

1 Mobile communication system
5 Network
10 RAN
20 CN
11 L1 filter
12 Beam integration/selection unit
13 L3 filter
14 Evaluator
15 L3 beam filter
16 Beam selection unit
100 UE
110 Receiver
120 Transmitter
130 Controller
140 Wireless communicator
200 gNB
210 Transmitter
220 Receiver
230 Controller
240 Network communicator
241 Transmitter
242 Receiver
250 Wireless communicator
300 AMF/UPF

## Claims

1. A communication method performed by a user equipment of a mobile communication system, the communication method comprising the steps of:
deriving a plurality of measurement values corresponding to one cell by repeatedly performing radio quality measurement for the one cell in layer 1 (L1);
generating a radio resource control (RRC) message comprising the plurality of measurement values corresponding to the one cell; and
transmitting the RRC message to a network.

2. The communication method according to claim 1, wherein each of the plurality of measurement values is an L1 measurement value to which a layer 3 (L3) filter has not been applied.

3. The communication method according to claim 2, wherein the RRC message comprises an L1 measurement value list comprising the plurality of measurement values in the form of a list.

4. The communication method according to claim 2, wherein the RRC message comprises location information indicating a geographical location of the user equipment and the plurality of measurement values associated with the location information.

5. The communication method according to any one of claims 1 to 4, wherein the radio quality measurement is measurement of a reception power of a synchronization signal or measurement of received power of a channel state information reference signal.

6. The communication method according to any one of claims 1 to 4, wherein the RRC message is a Measurement Report message or a UE Information Response message.

7. The communication method according to any one of claims 1 to 4, wherein
the user equipment receives configuration information on the radio quality measurement from the network, and
the configuration information comprises information for configuring a measurement interval that is a time interval at which the user equipment performs the radio quality measurement.

8. The communication method according to claim 7, wherein the information for configuring the measurement interval comprises information indicating a reference measurement interval and information indicating how many times the radio quality measurement is to be performed within the reference measurement interval.

9. The communication method according to claim 1, wherein
the user equipment:
detects an event related to a switch of a serving cell of the user equipment; and
generates the RRC message comprising the plurality of measurement values in a certain period of time before and/or after the occurrence of the event.

10. The communication method according to claim 9, wherein the event is any one of a failure of the switch, a success of the switch, and satisfaction of a trigger condition for the switch.

11. A user equipment used in a mobile communication system, the user equipment comprising:
a controller configured to derive a plurality of measurement values corresponding to one cell by repeatedly performing radio quality measurement for the one cell in layer 1 (L1) and generate a radio resource control (RRC) message comprising the plurality of measurement values corresponding to the one cell; and
a transmitter configured to transmit the RRC message to a network.

12. A network node used in a mobile communication system, the network node comprising:
a receiver configured to receive, from a user equipment, a radio resource control (RRC) message comprising a plurality of measurement values obtained by the user equipment repeatedly performing radio quality measurement for one cell in layer 1 (L1).
